# EUROPÄISCHE PATENTSCHRIFT

(11) **EP 1 242 729 B1**
(45) Veröffentlichungstag und Bekanntmachung des Hinweises auf die Patenterteilung: **16.02.2005**
(21) Anmeldenummer: 00990562.1
(22) Anmeldetag: 20.12.2000
(51) Int. Cl.: F02C 7/18, F02C 6/18, F01K 23/10

(54) **VERFAHREN ZUM BETREIBEN EINER DAMPFTURBINE SOWIE TURBINENANLAGE MIT EINER DANACH ARBEITENDEN DAMPFTURBINE**
METHOD FOR OPERATING A STEAM TURBINE, AND A TURBINE SYSTEM PROVIDED WITH A STEAM TURBINE THAT FUNCTIONS ACCORDING TO SAID METHOD
PROCEDE PERMETTANT DE FAIRE FONCTIONNER UNE TURBINE A VAPEUR, AINSI QU'ENSEMBLE TURBINE DOTE D'UNE TURBINE A VAPEUR FONCTIONNANT SELON LEDIT PROCEDE

(30) Priorität: 21.12.1999 DE 19961761; 27.12.1999 DE 19963299
(43) Veröffentlichungstag der Anmeldung: 25.09.2002
(73) Patentinhaber: SIEMENS AKTIENGESELLSCHAFT, 80333 München (DE)
(72) Erfinder: NÖLSCHER, Christoph, 90419 Nürnberg (DE); THIELE, Rudolf, 91058 Erlangen (DE)
(86) Internationale Anmeldenummer: PCT/DE2000/004574
(87) Internationale Veröffentlichungsnummer: WO 2001/046576

(56) Entgegenhaltungen:
- EP-A- 0 911 504
- WO-A-99/00583
- WO-A-99/37889
- DE-A- 19 716 721
- DE-C- 19 702 830
- US-A- 2 451 261
- US-A- 4 333 309
- US-A- 4 551 063
- US-A- 4 571 935

## Beschreibung

Die Erfindung bezieht sich auf ein Verfahren zum Betreiben einer Dampfturbine gemäß den Oberbegriff des Anspruchs 1. Sie bezieht sich weiter auf eine Turbinenanlage mit einer danach arbeitenden Dampfturbine.

Mit in bisherigen Kraftwerksanlagen eingesetzten Gasturbinen kann derzeit ein Anlagenwirkungsgrad bis ca. 40% erreicht werden. Das Arbeitsmittel für die Gasturbine wird durch Verbrennen eines Brennstoffs, z.B. Erdöl oder Erdgas, unter Zufuhr verdichteter Luft erzeugt. Die Arbeits- oder Arbeitsmitteltemperatur der Gasturbine liegt derzeit bei etwa 1200°C bis 1400°C. Aufgrund dieser hohen Temperatur des Arbeitsmittels werden Turbinenteile der Gasturbine, insbesondere deren Leit- und Laufschaufeln sowie die Turbinenwelle und/oder das Turbinengehäuse, üblicherweise gekühlt. Ein dazu eingesetztes Kühlmittel kann gemäß der WO 97/23715 ein Teil der verdichteten Luft oder gemäß der WO 98/48161 ein Brennstoffgemisch sein.

Demgegenüber kann mit bisher eingesetzten Dampfturbinen bei einer Frischdampftemperatur von ca. 540°C ein Anlagenwirkungsgrad von ca. 38% bis 40% erreicht werden. Zur Erhöhung des Frischdampfzustandes mit einer angestrebten Frischdampftemperatur von 600°C und einem angestrebten Frischdampfdruck von 270 bar und damit zur Steigerung des Wirkungsgrades einer Dampfturbine ist gemäß der WO 97/25521 vorgesehen, die Turbinenwelle und insbesondere die Schaufelfüße bestimmter Laufschaufeln mittels Kühldampf zu kühlen. Eine dampfgekühlte Dampfturbine ist auch aus der US 2,451,261 bekannt.

Mit einer kombinierten Gas- und Dampfturbinenanlage, bei der die im entspannten Arbeitsmittel aus der Gasturbine enthaltene Wärme zur Erzeugung von Dampf für die in einen Wasser-Dampf-Kreislauf geschaltete Dampfturbine genutzt wird, wird derzeit bei einer Frischdampftemperatur von ca. 540°C und einem Frischdampfdruck von z.B. 120bar ein Anlagenwirkungsgrad von etwa 55% bis 60% erreicht. Die Wärmeübertragung erfolgt dabei in einem der Gasturbine nachgeschalteten Abhitzedampferzeuger oder -kessel, in dem Heizflächen in Form von Rohren oder Rohrbündeln angeordnet sind. Diese wiederum sind in den Wasser-Dampf-Kreislauf der Dampfturbine geschaltet. Die Temperatur des der Dampfturbine zugeführten Frischdampfes hängt im Wesentlichen von der Temperatur des aus der z. B. dampfgekühlten Gasturbine abströmenden Abgases ab, wobei die Abgastemperatur üblicherweise etwa 550°C beträgt.

Durch den Artikel "Advanced Gas Turbines, Breaking the 60 percent efficiency barrier" aus der Zeitschrift "Modern Power Systems", Juni 1995, Seiten 29 bis 33, ist es bekannt, bei einer derartigen Gas- und Dampfturbinenanlage als Kühlmittel für die Gasturbine Dampf zu verwenden. Dieser Kühldampf wird dabei dem Wasser-Dampf-Kreislauf der Dampfturbine entnommen und diesem anschließend als erhitzter Kühldampf wieder zugeführt.

Gas- und Dampfturbinenanlagen, bei denen als Kühlmittel für die Gasturbine verwendeter Dampf einem der Gasturbine abgasseitig nachgeschalteten Abhitzedampferzeuger entnommen und einem Mittel- oder Niederdruckteil der Dampfturbine direkt oder über einen im Abhitzedampferzeuger vorgesehenen Zwischenüberhitzer zugeführt wird, sind auch aus den Druckschriften EP 0 911 504 A1, US 5,778,657, US 5,471,832, US 5,628,179 und US 4,424,668 bekannt.

Bei allen diesen dekannten Anlagen wird der Kühldampf in der Gasturbine auf eine Temperatur erhitzt, die nicht höher ist als die durch den Abhitzewärmetausch maximal erreichbare Frischdampftemperatur von ca. 540°C des der Dampfturbine zugeführten Frischdampfes, so dass der Anlagenwirkungsgrad schon allein aufgrund dieser - im Vergleich zur eingangs erwähnten, angestrebten Frischdampftemperatur von 600°C - niedrigen Frischdampftemperatur nur begrenzt ist. Würde der Kühldampf auf eine höhere Temperatur als diese maximal erreichbare Frischdampftemperatur erhitzt, so würde die dadurch höhere Arbeitsfähigkeit oder Exergie des erhitzten Kühldampfes nicht oder nur geringfügig genutzt.

Der Erfindung liegt die Aufgabe zugrunde, ein Verfahren zum Betreiben einer Dampfturbine anzugeben, bei dem durch effiziente Nutzung der Wärme des in einer Gasturbine erhitzten Kühldampfes eine Steigerung des Anlagenwirkungsgrads erzielt wird. Des Weiteren soll eine Turbinenanlage mit einer zur Durchführung des Verfahrens besonders geeigneten Dampfturbine angegeben werden.

Bezüglich des Verfahrens wird die Aufgabe erfindungsgemäß gelöst durch die Merkmale des Anspruchs 1. Dazu wird die Dampfturbine - praktisch ausschließlich - mit in der Gasturbine erhitztem Kühldampf betrieben, der dazu der zweckmäßigerweise gekühlten Dampfturbine als Frischdampf zugeführt wird. Vorzugsweise wird dabei der Gasturbine direkt Kühldampf zugeführt, der dann in der Gasturbine er- oder überhitzt wird. Jedoch kann der Gasturbine auch Kühlwasser zugeführt werden, das dann in der Gasturbine zunächst verdampft und anschließend er- bzw. überhitzt wird.

Dabei wird die ebenfalls dampfgekühlte Dampfturbine mit auf eine Temperatur größer 600°C erhitztem Kühldampf betrieben. Dieser dient bei einer Gas- und Dampfturbinenanlage als Frischdampf für eine separate Dampfturbine, d. h. einer zusätzlich zur in der Gasund Dampfturbinenanlage bereits vorhandenen Dampfturbine.

Die Erfindung geht dabei von der Überlegung aus, dass bei einer mit Dampf gekühlten Gasturbine aufgrund deren hoher Arbeitsmitteltemperatur von mehr als 1200°C eine Dampftemperatur des in der Gasturbine erhitzten Kühldampfes von mehr als 600°C erreicht werden kann. Die Gasturbine kann somit praktisch als Dampferzeuger und Dampfüberhitzer zur Erzeugung von Frischdampf mit entsprechend hoher Frischdampftemperatur arbeiten. Wird mit diesem erhitzten Kühldampf aus der dampfgekühlten Gasturbine eine Dampfturbine betrieben, kann deren Eintrittsdampf-Temperatur oder Frischdampftemperatur bis an die hohe Arbeitsmitteltemperatur der Gasturbine angenähert werden. Dadurch kann in besonders einfacher sowie effektiver Weise einerseits für eine Dampfturbine Frischdampf mit einer Temperatur oberhalb der bisher angestrebten 600°C in einfacher Art und Weise erzeugt werden, was zu einer weiteren Erhöhung des Dampfturbinenwirkungsgrades führt. Andererseits kann die Arbeitsfähigkeit oder Exergie des in der Gasturbine auf eine Temperatur größer oder gleich 600°C erhitzten Kühldampfes besser genutzt werden, als es mit den bisherigen Anlagenkonzepten möglich ist. Dies wiederum führt zu einer Erhöhung des Anlagenwirkungsgrades.

Durch geeignete Kühldampfführung innerhalb der Gasturbine ist praktisch eine Erhitzung des Kühldampfes auf vorzugsweise 700°C bis 800°C möglich. Der - im Vergleich mit einer Erhitzung des Kühldampfes auf eine niedrigere Temperatur - dadurch bedingte vergleichsweise geringe Kühleffekt innerhalb der Gasturbine - infolge des vergleichsweise kleinen Temperaturgradienten - kann durch Erhöhung des Kühldampfdurchsatzes ausgeglichen werden. Dies ist wiederum aufgrund der effizienten Nutzung der Energie des erhitzten Kühldampfes durch dessen arbeitsleistende Entspannung in der separaten Dampfturbine möglich.

Eine hierzu erforderliche zusätzliche Verdichtungsenergie für den erhöhten Kühldampfdurchsatz wird zweckmäßigerweise thermisch erzeugt, indem der Kühldampf einem bereits vorhandenen Wasser-Dampf-Kreislauf, beispielsweise einer mit durch Wärmetausch mit Abgas aus der Gasturbine erzeugtem Frischdampf betriebenen Dampfturbine in einer kombinierten Gas- und Dampfturbinenanlage oder deren Abhitzedampferzeuger, entnommen wird. Diesem bereits vorhandenen Wasser-Dampf-Kreislauf wird dann vorteilhafterweise auch der in der Dampfturbine entspannte erhitzte Kühldampf als Niedertemperaturdampf zugeführt.

Der üblicherweise erforderliche separate Frischdampferhitzer oder -überhitzer für die Dampfturbine ist quasi realisiert durch die Wärmetauscherflächen darstellenden Turbinenteile der Gasturbine, insbesondere deren dampfgekühlten Turbinenschaufeln und/oder Turbinenwelle. Dies ermöglicht eine besonders effektive Nutzung der Exergie des Kühldampfes bei gleicher Kühlwirkung. Die Dampfturbine kann dabei direkt zum mechanischen Antrieb eines Luftverdichters der Gasturbine, einer Speisewasserpumpe für das einem Abhitzedampferzeuger zugeführte Speisewasser oder zur Stromerzeugung, z.B. für eine Nebenanlage, eingesetzt werden.

Bei einer Gas- und Dampfturbinenanlage, bei der die mit dem aufgeheizten Kühldampf aus der Gasturbine betriebene Dampfturbine separat bereitgestellt ist, kann der zur Kühlung dieser separaten Dampfturbine dienende Wasserdampf dem der Gasturbine abgasseitig nachgeschalteten Abhitzedampferzeuger oder dem Wasser-Dampf-Kreislauf der weiteren Dampfturbine der Gas- und Dampfturbinenanlage entnommen werden.

Vorteilhafterweise wird der zur Kühlung dienende Wasserdampf der separaten Dampfturbine selbst entnommen und dieser erneut zugeführt. Der zur Kühlung dienende Wasserdampf durchströmt zweckmäßigerweise sowohl die Laufschaufeln als auch die Leitschaufeln zumindest der - in Richtung des als Frischdampf einströmenden erhitzten Kühldampfes gesehenen - ersten Lauf- bzw. Leitschaufelreihe der separaten Dampfturbine.

Zweckmäßigerweise wird der zur Kühlung dienende Wasserdampf den Laufschaufeln der separaten Dampfturbine über deren Turbinenwelle und dabei entgegen der Einströmrichtung des erhitzten Kühldampfes, d.h. entgegen der Einströmrichtung des dieser Dampfturbine zugeführten Frischdampfes, zugeführt. Die Turbinenwelle ist dabei vorzugsweise als Hohlwelle ausgeführt und dient somit zur Kühldampfleitung. Der in der Turbinenwelle und in den Schaufeln erhitzte Wasserdampf wird innerhalb der separaten Dampfturbine vorzugsweise in deren Arbeitsraum eingeleitet. Die Einleitung erfolgt dabei über die Turbinenschaufeln, aus denen der erhitzte Kühldampf über Schaufelöffnungen oder -bohrungen in den Arbeitsraum austritt. Alternativ erfolgt die Einleitung durch Rezirkulation, indem der zur Kühlung dienende Wasserdampf einer Druckstufe der separaten Dampfturbine mit im Vergleich zum hohen Dampfdruck im Eintrittsbereich niedrigem oder mittlerem Dampfdruck entnommen und nach Durchströmen der Turbinenschaufeln in diesen oder einen vergleichsweise noch niedrigeren Druckbereich zurückgeführt wird. Der zur Kühlung dienende Wasserdampf kann auch aus der separaten Dampfturbine herausgeführt und einer weiteren Nutzung zugeführt werden.

Infolge einer derartigen Dampfkühlung ist ein Betrieb der separaten Dampfturbine als Hochtemperatur-Turbine mit einer Frischdampftemperatur oberhalb von 600°C, insbesondere oberhalb von 700°C, möglich. Der zur Kühlung dienende Wasserdampf, der vorzugsweise zumindest die erste Leit- und/oder Laufschaufelreihe sowie zugehörige Gehäuse- und Wellenwände durchströmt, bildet eine kühle Schutzschicht an den entsprechenden Schaufel- bzw. Wandoberflächen der separaten Dampfturbine. Dadurch ist gewährleistet, dass der als Arbeitsmedium oder Frischdampf dienende erhitzte Kühldampf aus der Gasturbine nicht oder nur unwesentlich abgekühlt wird. Infolge der Kühlung der separaten Dampfturbine können die Wandtemperaturen, deren Turbinengehäuse und deren Turbinenschaufeln sowie deren Turbinenwelle kleiner als z.B. 540°C gehalten werden. Dies ermöglicht auch bei einer Temperatur des erhitzten Kühldampfes größer 600°C und einem hohen Frischdampfdruck von z.B. 120bar den Einsatz verfügbarer und kostengünstiger Standardmaterialien. Bei einer Frischdampftemperatur von mehr als 700°C ist es zweckmäßig, insbesondere im Bereich der ersten Leit- und Laufschaufelreihe der separaten Dampfturbine, die betroffenen Turbinenteile mit Wärmedämmschichten zu versehen.

Aufgrund dieser hohen Frischdampftemperatur ist auch der Wirkungsgrad der Turbinenanlage gegenüber herkömmlichen Anlagenkonzepten erhöht. So hat die Dampfkühlung der mit dem erhitzten Kühldampf aus der Gasturbine betriebenen separaten Dampfturbine gegenüber einer dampfgekühlten Gasturbine den erheblichen Vorteil, dass der in den Arbeitsraum der separaten Dampfturbinen eintretende Kühldampf selbst als Arbeitsmedium verwendet und innerhalb des angeschlossenen Wasser-Dampf-Kreislaufs rezirkuliert werden kann. Aufgrund der Kühlung der separaten Dampfturbine mittels Wasserdampf kann bei Verwendung herkömmlicher Materialien für das Turbinengehäuse und die Turbinenschaufeln sowie die Turbinenwelle die Frischdampftemperatur auf bis zu 800°C und damit der Anlagenwirkungsgrad gegenüber dem bisher erreichten Anlagenwirkungsgrad von 60% um 2 bis 4 Prozentpunkte auf 62% bis 64% erhöht werden.

Bezüglich der Turbinenanlage wird die Aufgabe erfindungsgemäß gelöst durch die Merkmale des Anspruchs 10. Vorteilhafte Ausgestaltungen sind Gegenstand der auf diesen rückbezogenen Unteransprüche.

Die mit der Erfindung erzielten Vorteile bestehen insbesondere darin, dass durch Verwendung von erhitztem Kühldampf einer dampfgekühlten Gasturbine als Frischdampf für eine ebenfalls vorzugsweise dampfgekühlte Dampfturbine ein besonders hoher Anlagenwirkungsgrad infolge besonders effizienter Nutzung der Exergie oder Arbeitsfähigkeit des erhitzten Kühldampfs erreicht wird. Indem die Gasturbine als Frischdampferzeuger oder -überhitzer für eine solche separate Hochtemperatur-Dampfturbine genutzt wird, entfällt gegenüber einer klassischen Dampfturbinenanlage mit einem fossil gefeuerten oder solar beheizten Dampferzeuger sowie gegenüber einer klassischen kombinierten Gas- und Dampfturbinenanlage der Dampferzeuger, zumindest jedoch der üblicherweise im Dampferzeuger oder Dampfkessel vorgesehene Frischdampferhitzer oder -überhitzer.

Eine weitere Steigerung des Anlagenwirkungsgrades wird dadurch erreicht, dass die mit dem erhitzten Kühldampf der Gasturbine betriebene Dampfturbine selbst mittels Wasserdampf, z. B. aus deren Wasser-Dampf-Kreislauf oder vorzugsweise aus der bereits vorhandenen Dampfturbine, gekühlt wird und damit die Arbeitsfähigkeit des Hochtemperaturdampfes besonders effektiv genutzt werden kann. Eine Erhöhung des Durchsatzes von Kühldampf durch die Gasturbine und/oder die Erhöhung der Kühldampftemperatur des für die Gasturbine verwendeten Kühldampfes ermöglicht zudem infolge der verstärkten Dampfkühlung eine Erhöhung der Gaseintrittstemperatur der Gasturbine.

Mittels des beschriebenen Verfahrens ist auch bei einem auf kleiner als 40bar beschränkten Frischdampfdruck eine Frischdampftemperatur für die separate Dampfturbine von größer 700°C möglich. Bereits eine Erhitzung des Kühldampfes innerhalb der Gasturbine auf etwa 600°C wirkt sich aufgrund des genannten Effektes vorteilhaft auf den Anlagenwirkungsgrad aus.

Nachfolgend werden Ausführungsbeispiele der Erfindung anhand einer Zeichnung näher erläutert. Darin zeigen:
- FIG 1: schematisch ein Blockschaltbild einer Turbinenanlage mit einer dampfgekühlten Gasturbine und mit einer mittels erhitztem Kühldampf betriebenen Hochtemperatur-Dampfturbine,
- FIG 2: schematisch ein Blockschaltbild einer Gas- und Dampfturbinenanlage mit dampfgekühlter Gasturbine und separater Hochtemperatur-Dampfturbine,
- FIG 3: schematisch eine erste Variante der dampfgekühlten Hochtemperatur-Dampfturbine gemäß den Figuren 1 und 2, sowie
- FIG 4: eine zweite Variante der dampfgekühlten Hochtemperatur-Dampfturbine.

Einander entsprechende Teile werden in allen Figuren mit den gleichen Bezugszeichen versehen.

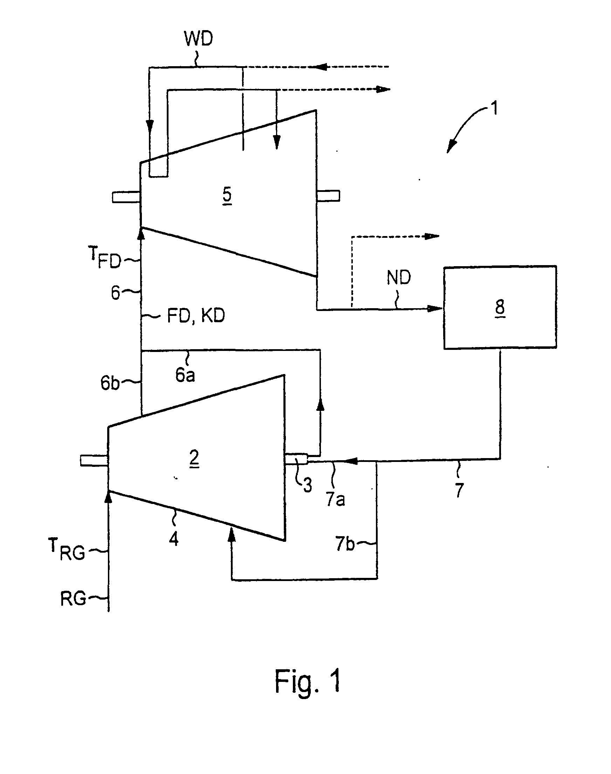

Die Turbinenanlage 1 gemäß FIG 1 umfasst eine Gasturbine 2, der eingangsseitig in einer (nicht dargestellten) Brennkammer erzeugtes Rauchgas RG als Arbeitsmittel zugeführt wird. Der Gasturbine 2 wird über deren Welle 3 und über deren Turbinengehäuse 4 Kühldampf KD zugeführt, der in nicht näher dargestellter Art und Weise insbesondere zur Kühlung der Turbinenschaufeln der Gasturbine 2 genutzt und dabei auf eine Temperatur von z.B. 600°C bis 800°C erhitzt wird.

Der in der Gasturbine 2 erhitzte Kühldampf KD wird einer Dampfturbine 5 als Frischdampf FD zugeführt. Dazu ist die Dampfturbine 5 eingangsseitig mit der Gasturbine 2 über eine Frischdampfleitung 6 verbunden, die über Zweigleitungen 6a,6b an die Turbinenwelle 3 und über diese an die Laufschaufeln bzw. an die Leitschaufeln der Gasturbine 2 geführt ist.

Der Kühldampf KD für die Gasturbine 2 wird dieser über eine Kühldampfleitung 7 zugeführt, die über eine erste Zweigleitung 7a in die Turbinenwelle 3 und über diese in Laufschaufeln sowie über eine zweite Zweigleitung 7b in das Turbinengehäuse 4 und über dieses in Leitschaufeln der Gasturbine 2 mündet. Der Kühldampf KD wird somit zur Kühlung der Turbinenschaufeln und der Turbinenwelle 3 der Gasturbine 2 sowie deren Turbinengehäuse oder Gehäuseteilen, insbesondere im Einströmbereich des heißen Rauchgases RG, genutzt und dabei auf eine Temperatur von z.B. 600°C bis 800°C erhitzt.

Der Kühldampf KD für die Gasturbine 2 wird zweckmäßigerweise zumindest teilweise aus in der Dampfturbine 5 entspanntem Niedertemperaturdampf ND gewonnen, indem dieser einem bereits vorhandenen Wasser-Dampf-Kreislauf 8 zugeführt und dort in nicht näher dargestellter Art und Weise zunächst kondensiert wird. Das auf den erforderlichen Kühldampfdruck gepumpte Kondensat wird anschließend durch Wärmetausch, vorzugsweise mit Abgas AG aus der Gasturbine 2, verdampft und der dabei erzeugte Dampf wird auf die gewünschte Kühldampftemperatur erwärmt. Der Niedertemperaturdampf ND kann zumindest teilweise auch einer anderen Verwendung zugeführt werden, z.B. als Prozeßdampf.

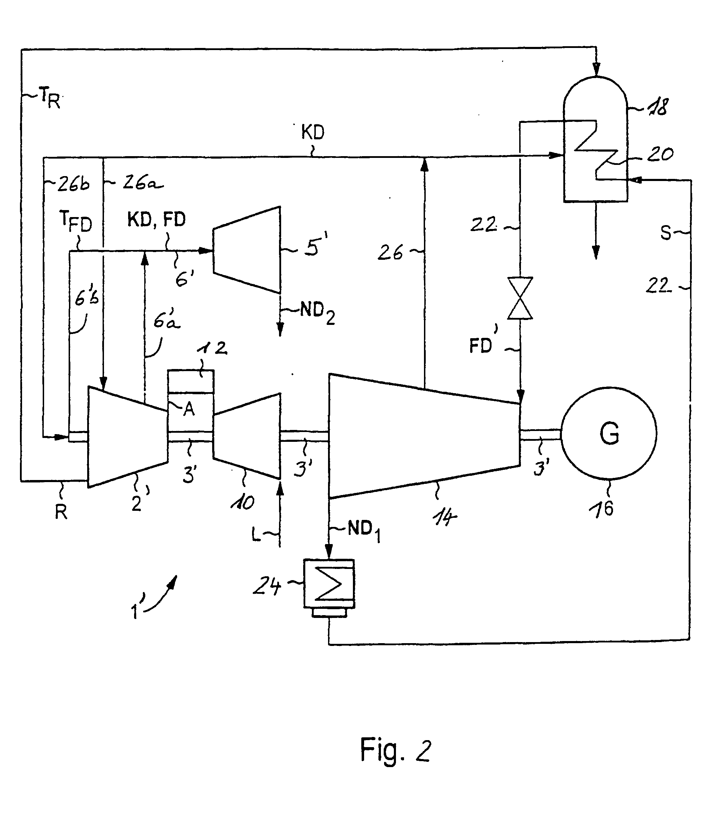

Die Gas- und Dampfturbinenanlage 1' gemäß FIG 2 umfasst eine Gasturbinenanlage mit einer Gasturbine 2' mit angekoppeltem Luftverdichter 10 und eine der Gasturbine 2' vorgeschaltete Brennkammer 12, in der Brennstoff unter Zufuhr verdichteter Luft L zum Arbeitsmittel oder Brenngas A für die Gasturbine 2' verbrannt wird. Die Gasturbine 2' und der Luftverdichter 10 sowie eine weitere Dampfturbine 14 und ein Generator 16 sitzen auf einer gemeinsamen Turbinenwelle 3'. Die Gas- und Dampfturbinenanlage 1' ist somit im Ausführungsbeispiel als Einwellenanlage (single shaft) ausgeführt.

Der Gasturbine 2' ist abgasseitig ein Abhitzedampferzeuger oder -kessel 18 nachgeschaltet, dessen Heizflächen 20 in den Wasser-Dampf-Kreislauf 22 der weiteren Dampfturbine 14 über einen dieser abdampfseitig nachgeordneten Kondensator 24 geschaltet sind. Das in der Gasturbine 2' arbeitsleistend entspannte Arbeitsmittel A wird dem Abhitzedampferzeuger 18 als Rauchgas oder Abgas R zugeführt.

Der weiteren Dampfturbine 14 wird im Abhitzedampferzeuger 18 durch Wärmetausch mit dem Rauchgas R erzeugter Frischdampf FD' zugeführt. Der z. B. in einer Hoch-, Mittel- und/oder Niederdruckstufe der weiteren Dampfturbine 14 arbeitsleistend entspannte Dampf wird als Niedertemperaturdampf ND₁ dem Kondensator 24 zugeführt und kondensiert dort. Das im Kondensator 24 anfallende Kondensat wird als Speisewasser S den Heizflächen 20 des Abhitzedampferzeugers 18 erneut zugeführt.

Der weiteren Dampfturbine 14 wird an geeigneter Stelle Dampf entnommen und als Kühldampf KD der Gasturbine 2' zugeführt. Ein Teilstrom des der weiteren Dampfturbine 14 entnommenen Dampfes kann auch in den Abhitzedampferzeuger 18 und damit in den Wasser-Dampf-Kreislauf 22 zurückgeführt werden. Dies ermöglicht eine besonders geeignete Einstellung der Menge des der Gasturbine 2' zugeführten Kühldampfes pro Zeiteinheit und somit eine effektive Steuerung des Kühldampfdurchsatzes durch die Gasturbine 2'.

Dazu ist die Gasturbine 2' mit der weiteren Dampfturbine 14 über eine Kühldampfleitung 26 verbunden, die über eine erste Zweigleitung 26a in (nicht dargestellte) Leitschaufeln und Gehäuseteile sowie über eine zweite Zweigleitung 26b in die Turbinenwelle 3' und in Laufschaufeln der Gasturbine 2' mündet. Der Kühldampf KD wird somit zur Kühlung der Turbinenschaufeln und der Turbinenwelle 3' der Gasturbine 2' sowie deren Gehäuseteile, insbesondere im Einströmbereich des heißen Brenngases oder Arbeitsmittels A, genutzt und dabei auf eine Temperatur von z.B. 600°C bis 800°C erhitzt.

Der in der Gasturbine 2' erhitzte Kühldampf KD wird der separaten Dampfturbine 5' als Frischdampf FD zugeführt. Dazu ist die separate Dampfturbine 5' eingangsseitig mit der Gasturbine 2' über eine Frischdampfleitung 6' verbunden, die über Zweigleitungen 6'a,6'b an die Leitschaufeln bzw. an die Turbinenwelle 3' geführt ist. Der in der separaten Dampfturbine 5' entspannte Niedertemperaturdampf ND₂ wird dem Kondensator 24 oder einer anderen Verwendung, z. B. als Prozeßdampf, zugeführt.

Die Dampfturbine 5,5' ist auf die Temperatur und den Druck des Frischdampfes FD, d.h. des erhitzten Kühldampfes KD aus der Gasturbine 2,2' ausgelegt. Dadurch wird dessen Arbeitsfähigkeit besonders effektiv genutzt, so dass ein besonders hoher Wirkungsgrad der Turbinenanlage 1,1' erreicht wird. Die Frischdampftemperatur T_{FD} des erhitzten Kühldampfes KD und damit des Frischdampfes FD beträgt vorzugsweise 600°C bis 700°C. Die Dampfturbine 5,5' arbeitet somit als Hochtemperatur-Dampfturbine.

Da die Arbeitsmitteltemperatur T_{RG} des der Gasturbine 2,2' zugeführten Brenn- oder Rauchgases RG üblicherweise oberhalb von 1200°C liegt, kann auch der Kühldampf KD auf eine Frischdampftemperatur T_{FD} von größer 700°C erhitzt werden, indem insbesondere die Turbinenschaufeln der Gasturbine 2,2' quasi als Frischdampferhitzer genutzt werden. Durch die effektive Nutzung des erhitzten Kühldampfes KD,FD kann auch der Kühldampfdurchsatz durch die Gasturbine 2,2' entsprechend erhöht werden, was wiederum den Kühleffekt bei gleichzeitiger Exergieerhöhung des Kühldampfes KD steigert.

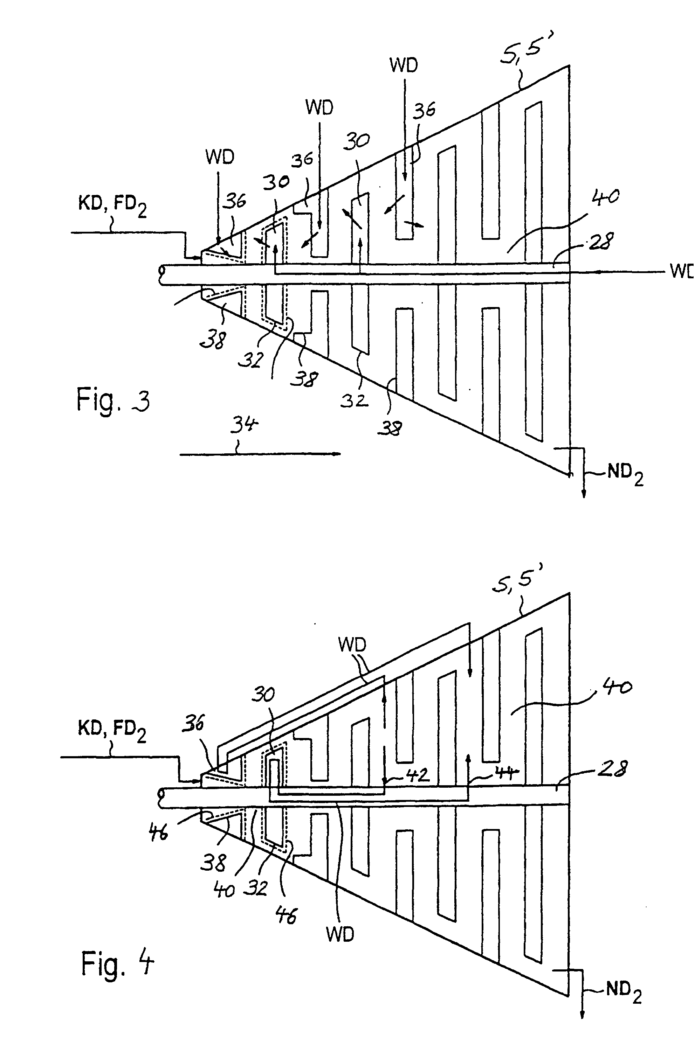

Zur Beherrschung derart hoher Frischdampftemperaturen T_{FD}, mit T_{FD} > 600°C, wird die Dampfturbine 5,5' vorzugsweise mittels Wasserdampf WD selbst ebenfalls gekühlt. Dies ist anhand der Varianten in den Figuren 3 und 4 vergleichsweise deutlich veranschaulicht. Der zur Kühlung dienende Wasserdampf WD wird zweckmäßigerweise der Dampfturbine 5, an geeigneter Stelle selbst entnommen (FIG 1). Auch kann der Wasserdampf WD der weiteren Dampfturbine 14 oder dem Abhitzedampferzeuger 18 - und damit an geeigneter Stelle dem Wasser-Dampf-Kreislauf 22 der weiteren Dampfturbine 14 gemäß dem Ausführungsbeispiel nach FIG 2 - entnommen werden.

Wie in FIG 3 schematisch dargestellt, wird der zur Kühlung dienende Wasserdampf WD einerseits einer Turbinenwelle 28 und über diese den Laufschaufeln 30 zumindest der ersten Laufschaufelreihe 32 zugeführt. Im Ausführungsbeispiel wird auch der - in Einströmrichtung 34 des der Dampfturbine 5,5' zugeführten Frischdampfes KD,FD gesehen - zweiten Laufschaufelreihe 32 zur Kühlung dienender Wasserdampf WD zugeführt. Dabei wird der Wasserdampf WD der als Hohlwelle ausgeführten Turbinenwelle 28 vorzugsweise entgegen der Einströmrichtung 34 des erhitzten Kühldampfes KD und damit des Frischdampfes FD zugeführt. Der zur Kühlung dienende Wasserdampf WD wird somit entlang des sich innerhalb der Dampfturbine 5,5' in Einströmrichtung 34 entspannenden und zunehmend abkühlenden Frischdampfes FD erhitzt.

Zweckmäßigerweise wird auch den Leitschaufeln 36 der ersten Leitschaufelreihe 38 zu deren Kühlung Wasserdampf WD zugeführt. Im Ausführungsbeispiel werden zusätzlich auch die Leitschaufeln 36 der zweiten und dritten Leitschaufelreihe 38 der Dampfturbine 5,5' mit Wasserdampf WD gekühlt.

Der die Turbinenwelle 28 und die Laufschaufeln 30 sowie die Leitschaufeln 36 durchströmende Wasserdampf WD wird in den Arbeitsraum 40 der Dampfturbine 5,5' eingeleitet. Der Wasserdampf WD vermischt sich dort mit dem entspannten Frischdampf FD und verlässt zusammen mit diesem die Dampfturbine 5,5' als Niedertemperaturdampf ND.

Bei der Ausführung gemäß FIG 4 wird der zur Kühlung dienende Wasserdampf WD der Dampfturbine 5,5' aus deren Mittel- oder Niederdruckbereich p_{M} bzw. p_{N} entnommen und in die im Hochdruckbereich p_{H} der Dampfturbine 5,5' angeordneten Laufschaufeln 30 zumindest der ersten Laufschaufelreihe 32 geführt. Dazu ist im Ausführungsbeispiel im Mitteldruckbereich p_{M} eine Eintrittsöffnung 42 in der Turbinenwelle 28 vorgesehen, über die der Wasserdampf WD mittleren oder niedrigen Drucks in die Turbinenwelle 28 eintritt und über diese in die Laufschaufeln 30 strömt. Aus diesen strömt der erhitzte Wasserdampf WD über die Turbinenwelle 28 und über eine in dieser vorgesehenen Austrittsöffnung 44, die im Ausführungsbeispiel im Niederdruckbereich p_{N} liegt, in den Arbeitsraum 40 der Dampfturbine 5,5' zurück. Die Strömung des Wasserdampfes WD wird durch die Druckdifferenz, d.h. durch das Druckgefälle oder den Druckgradienten, zwischen dem Mitteldruckbereich p_{M} und dem Niederdruckbereich p_{N} mit vergleichsweise niedrigem Dampfdruck erzeugt.

In entsprechender Art und Weise werden bei dieser zweiten Variante auch die Leitschaufeln 36 zumindest der ersten Leitschaufelreihe 38 der Dampfturbine 5,5' durch Rezirkulation von dem Mitteldruckbereich p_{M} entnommenem und nach Durchströmen der Leitschaufeln 36 in den Niederdruckbereich p_{N} geführtem Wasserdampf WD gekühlt. Auch kann bei beiden Varianten in nicht näher dargestellter Art und Weise zur Kühlung dienender Wasserdampf WD entlang der Gehäusewand der Dampfturbine 5,5' geführt werden. Bei beiden Varianten sind außerdem zweckmäßigerweise die Leit- und Laufschaufeln 36,30 zumindest der ersten Leit- bzw. Laufschaufelreihe 38,32 mit einer Wärmeschutz- oder Wärmedämmschicht 46 versehen.

Auch kann bei beiden Varianten in nicht näher dargestellter Art und Weise zur Kühlung dienender Wasserdampf WD entlang der Gehäusewand der Dampfturbine 5,5' geführt werden, wobei die Gehäusewand ebenfalls mit einer Wärmedämmschicht versehen sein kann.

## Patentansprüche

1. Verfahren zum Betreiben einer Dampfturbine (5,5'), in der Dampf (FD) arbeitsleistend entspannt wird, wobei der Dampf (FD) in einer Gasturbine (2,2') durch Erhitzen von dieser zugeführtem Kühldampf (KD) erzeugt wird,
**dadurch gekennzeichnet, dass** die Dampfturbine (5,5') mit auf eine Frischdampftemperatur (T_{FD}) größer 600°C erhitztem Kühldampf (KD) aus der Gasturbine (2,2') betrieben wird, und dass die Dampfturbine (5,5') mit Wasserdampf (WD) gekühlt wird.

2. Verfahren nach Anspruch 1 ,
**dadurch gekennzeichnet, dass** der zur Kühlung dienende Wasserdampf (WD) der Dampfturbine (5) selbst entnommen wird.

3. Verfahren nach Anspruch 1 oder 2,
**dadurch gekennzeichnet, dass** der zur Kühlung dienende Wasserdampf (WD) einer Anzahl von Laufschaufeln (30) und Leitschaufeln (36) zugeführt wird und diese durchströmt, wobei der Wasserdampf (WD) den Laufschaufeln (30) der Dampfturbine (5,5') über deren Turbinenwelle (28) zugeführt wird.

4. Verfahren nach Anspruch 3,
**dadurch gekennzeichnet, dass** der in den Turbinenschaufeln (30,36) erhitzte Wasserdampf (WD) aus diesen austritt und innerhalb der Dampfturbine (5,5') in deren Arbeitsraum (40) eingeleitet wird.

5. Verfahren nach Anspruch 3 oder 4,
**dadurch gekennzeichnet, dass** die Laufund/oder Leitschaufeln (30,36) zumindest der ersten Schaufelreihe (32 bzw. 38) durch Rezirkulation von in einem Mitteldruckbereich (p_{M}) der Dampfturbine (5,5') entnommenem und nach Durchströmen der Lauf- bzw. Leitschaufeln (30,36) in einen Niederdruckbereich (p_{N}) eingeleiteten Wasserdampf (WD) gekühlt werden.

6. Verfahren nach einem der Ansprüche 1 bis 5,
**dadurch gekennzeichnet, dass** der Kühldampf (KD) für die Gasturbine (2,2') zumindest teilweise aus der Dampfturbine (5) entnommenem Niedertemperaturdampf (ND) erzeugt wird.

7. Verfahren nach einem der Ansprüche 1 bis 5,
**dadurch gekennzeichnet, dass** der Kühldampf (KD) einem der Gasturbine (2') abgasseitig nachgeschalteten Abhitzedampferzeuger (18) entnommen wird.

8. Verfahren nach Ansprch 7,
**dadurch gekennzeichnet, dass** der zur Kühlung dienende Wasserdampf (WD) dem Abhitzedampferzeuger (18) entnommen wird.

9. Verfahren nach Anspruch 7 oder 8,
**dadurch gekennzeichnet, dass** der Kühldampf (KD) und/oder der zur Kühlung dienende Wasserdampf (WD) einer mit Dampf (FD) aus dem Abhitzedampferzeuger (18) betriebenen weiteren Dampfturbine (14) entnommen wird.

10. Turbinenanlage mit einer nach dem Verfahren nach einem der Ansprüche 1 bis 9 arbeitenden dampfgekühlten Dampfturbine (5,5') und mit einer dampfgekühlten Gasturbine (2,2'), wobei die Dampfturbine (5,5') eingangsseitig mit der Gasturbine (2,2') über eine Frischdampfleitung (6,6') verbunden ist, über die der Dampfturbine (5,5') der erhitzte Kühldampf (KD) aus der Gasturbine (2,2') als Frischdampf (FD) zugeführt ist.

11. Turbinenanlage nach Anspruch 10,
**dadurch gekennzeichnet, dass** die Gasturbine (2,2') mit der Dampfturbine (5,5') über eine Kühldampfleitung (7,26) verbunden ist, über die der Dampfturbine (5,5') entnommener Kühldampf (KD) der Gasturbine (2,2') zugeführt ist.

12. Turbinenanlage nach Anspruch 10, mit einem der Gasturbine (2') abgasseitig nachgeschalteten Abhitzedampferzeuger(18), dessen Heizflächen (20) in den Wasser-Dampf-Kreislauf (22) einer weiteren Dampfturbine (5') geschaltet sind.

13. Turbinenanlage nach Anspruch 12,
**dadurch gekennzeichnet, dass** die Gasturbine (2') mit der weiteren Dampfturbine (14) über eine Kühldampfleitung (26) verbunden ist, über die der weiteren Dampfturbine (5') entnommener Kühldampf (KD) der Gasturbine (2') zuführbar ist.

## Claims

1. Method for operating a steam turbine (5, 5'), in which steam (FD) is expanded so as to perform work, the steam (FD) being generated in a gas turbine (2, 2') by the heating of cooling steam (KD) supplied to the latter, **characterized in that** the steam turbine (5, 5') is operated with cooling steam (KD) from the gas turbine (2, 2'), said cooling steam being heated to a fresh-steam temperature (T_{FD}) higher than 600°C, and **in that** the steam turbine (5, 5') is cooled by means of steam (WD).

2. Method according to Claim 1, **characterized in that** the steam (WD) serving for cooling is extracted from the steam turbine (5) itself.

3. Method according to Claim 1 or 2, **characterized in that** the steam (WD) serving for cooling is supplied to a number of moving blades (30) and guide vanes (36) and flows through these, the steam (WD) being supplied to the moving blades (30) of the steam turbine (5, 5') via the turbine shaft (28) of the latter.

4. Method according to Claim 3, **characterized in that** the steam (WD) heated in the turbine blades (30, 36) emerges from these and is introduced within the steam turbine (5, 5') into the working space (40) of the latter.

5. Method according to Claim 3 or 4, **characterized in that** the moving blades and/or guide vanes (30, 36) of at least the first blade row (32 of 38) are cooled by the recirculation of steam (WD) extracted in a medium-pressure region (p_{M}) of the steam turbine (5, 5') and, after flowing through the moving blades or guide vanes (30, 36), introduced into a low-pressure region (p_{N}).

6. Method according to one of Claims 1 to 5, **characterized in that** the cooling steam (KD) for the gas turbine (2, 2') is generated at least partially by low-temperature steam (ND) extracted from the steam turbine (5).

7. Method according to one of Claims 1 to 5, **characterized in that** the cooling steam (KD) is extracted from a waste-heat steam generator (18) following the gas turbine (2') on the exhaust-gas side.

8. Method according to Claim 7, **characterized in that** the steam (WD) serving for cooling is extracted from the waste-heat steam generator (18).

9. Method according to Claim 7 or 8, **characterized in that** the cooling steam (KD) and/or the steam (WD) serving for cooling is extracted from a further steam turbine (14) operated by steam (FD) from the waste-heat steam generator (18).

10. Turbine plant with a steam-cooled steam turbine (5, 5') working according to the method according to one of Claims 1 to 9 and with a steam-cooled gas turbine (2, 2'), the steam turbine (5, 5') being connected on the inlet side to the gas turbine (2, 2') via a fresh-steam line (6, 6'), via which the heated cooling steam (KD) from the gas turbine (2, 2') is supplied as fresh steam (FD) to the steam turbine (5, 5').

11. Turbine plant according to Claim 10, **characterized in that** the gas turbine (2, 2') is connected to the steam turbine (5, 5') via a cooling-steam line (7, 26), via which cooling steam (KD) extracted from the steam turbine (5, 5') is supplied to the gas turbine (2, 2').

12. Turbine plant according to Claim 10, with a waste-heat steam generator (18) which follows the gas turbine (2') on the exhaust-gas side and the heating surfaces (20) of which are connected into the water/steam circuit (22) of a further steam turbine (5').

13. Turbine plant according to Claim 12, **characterized in that** the gas turbine (2') is connected to the further steam turbine (14) via a cooling-steam line (26), via which cooling steam (KD) extracted from the further steam turbine (5') can be supplied to the gas turbine (2').

## Revendications

1. Procédé pour faire fonctionner une turbine (5, 5') à vapeur, dans lequel de la vapeur (FD) est détendue en fournissant du travail, la vapeur (FD) étant produite dans une turbine (2, 2') à gaz par chauffage de vapeur (KD) de refroidissement qui lui est apportée,
**caractérisé en ce que** l'on fait fonctionner la turbine (5, 5') à vapeur avec de la vapeur (KD) de refroidissement provenant de la turbine (2, 2') à gaz et portée à une température (T_{FD}) de vapeur fraîche supérieure à 600°C et **en ce que** l'on refroidit la turbine (5, 5') à vapeur par de la vapeur (WD) d'eau.

2. Procédé suivant la revendication 1,
**caractérisé en ce que** l'on prélève la vapeur (WD) d'eau servant au refroidissement de la turbine (5) à vapeur soi-même.

3. Procédé suivant la revendication 1 ou 2,
**caractérisé en ce que** l'on apporte la vapeur (WD) d'eau servant au refroidissement à un certain nombre d'aubes (30) mobiles et d'aubes (36) directrices et on la fait passer dans celles-ci, la vapeur (WD) d'eau étant apportée aux aubes (30) mobiles de la turbine (5, 5') à vapeur par son arbre (28) de turbine.

4. Procédé suivant la revendication 3,
**caractérisé en ce que** la vapeur (WD) d'eau chauffée dans les aubes (30, 36) de turbine en sort et est introduite dans la turbine (5, 5') à vapeur dans sa chambre (40) de travail.

5. Procédé suivant la revendication 3 ou 4,
**caractérisé en ce que** l'on refroidit les aubes (30, 36) mobiles et/ou directrices au moins de la première rangée (32 et 38) d'aubes par recirculation de vapeur (WD) d'eau prélevée d'une zone (P_{M}) moyenne pression de la turbine (5, 5') à vapeur et envoyée après passage dans les aubes (30, 36) mobiles et directrices dans une zone (P_{N}) basse pression.

6. Procédé suivant l'une des revendications 1 à 5,
**caractérisé en ce que** l'on produit la vapeur (KD) de refroidissement de la turbine (2, 2') à gaz au moins en partie à partir de la vapeur (ND) à basse température prélevée de la turbine (5) à vapeur.

7. Procédé suivant l'une des revendications 1 à 5,
**caractérisé en ce que** l'on prélève la vapeur (KD) de refroidissement d'un générateur (18) de vapeur à récupération de la chaleur perdue monté en aval du côté des gaz d'échappement de la turbine (2') à gaz.

8. Procédé suivant la revendication 7,
**caractérisé en ce que** l'on prélève la vapeur (WD) d'eau servant au refroidissement du générateur (18) de vapeur à récupération de la chaleur perdue.

9. Procédé suivant la revendication 7 ou 8,
**caractérisé en ce que** l'on prélève la vapeur (KD) de refroidissement et/ou la vapeur (WD) d'eau servant au refroidissement d'une autre turbine (14) à vapeur entraînée par de la vapeur (FD) provenant du générateur (18) de vapeur à récupération de la chaleur perdue.

10. Installation à turbine comprenant une turbine (5, 5') à vapeur fonctionnant par le procédé suivant l'une des revendications 1 à 9 et à refroidissement par de la vapeur et une turbine (2, 2') à gaz à refroidissement par de la vapeur, la turbine (5, 5') à vapeur communiquant du côté de l'entrée avec la turbine (2, 2') à gaz par un conduit (6, 6') pour de la vapeur fraîche par lequel la vapeur (KD) de refroidissement chauffée pour la turbine (5, 5') à vapeur est apportée en tant que vapeur (FD) fraîche de la turbine (2, 2') à gaz.

11. Installation à turbine suivant la revendication 10,
**caractérisée en ce que** la turbine (2, 2') communique avec la turbine (5, 5') à vapeur par un conduit (7, 26) pour de la vapeur de refroidissement par lequel la vapeur (KD) de refroidissement prélevée de la turbine (5, 5') à vapeur est apportée à la turbine (2, 2') à gaz.

12. Installation à turbine suivant la revendication 10, comprenant un générateur (18) de vapeur à récupération de la chaleur perdue monté en aval du côté des gaz d'échappement de la turbine (2') à gaz et dont les surfaces (20) de chauffe sont montées dans le circuit (22) eau-vapeur d'une autre turbine (5') à vapeur.

13. Installation à turbine suivant la revendication 12,
**caractérisée en ce que** la turbine (2') à gaz communique avec l'autre turbine (14) à vapeur par un conduit (26) pour de la vapeur de refroidissement par lequel la vapeur (KD) de refroidissement prélevée de l'autre turbine (5') à vapeur peut être apportée à la turbine (2') à gaz.
